# EUROPÄISCHE PATENTSCHRIFT

(11) **EP 2 773 933 B1**
(45) Veröffentlichungstag und Bekanntmachung des Hinweises auf die Patenterteilung: **16.09.2015**
(21) Anmeldenummer: 12790394.6
(22) Anmeldetag: 31.10.2012
(51) Int. Cl.: G01L 1/24, G01N 3/06, G01B 11/16

(54) **VERFAHREN ZUR ERMITTLUNG EINES BEARBEITUNGSERGEBNISSES BEI EINER OBERFLÄCHENBEARBEITUNG VON BAUTEILEN**
METHOD FOR DETERMINING A MACHINING RESULT DURING SURFACE MACHINING OF COMPONENTS
PROCÉDÉ DE DÉTERMINATION DU RÉSULTAT D'UN TRAITEMENT LORS DU TRAITEMENT DE SURFACE DE COMPOSANTS

(30) Priorität: 31.10.2011 DE 102011117401
(43) Veröffentlichungstag der Anmeldung: 10.09.2014
(73) Patentinhaber: Rolls-Royce Deutschland Ltd & Co KG, 15827 Blankenfelde-Mahlow (DE)
(72) Erfinder: HAUBOLD, Thomas, 61273 Wehrheim (DE); HENNIG, Wolfgang, 61267 Neu-Anspach (DE); FELDMANN, Goetz, 61440 Oberursel (DE)
(74) Vertreter: Kronthaler, Wolfgang N.K.
(86) Internationale Anmeldenummer: PCT/DE2012/001055
(87) Internationale Veröffentlichungsnummer: WO 2013/064139

(56) Entgegenhaltungen:
- WO-A1-2008/061337
- WO-A2-01/92843
- DE-A1- 2 242 201
- DE-A1-102010 001 286
- FR-A1- 2 666 895
- US-A- 4 015 465

## Beschreibung

Die Erfindung betrifft ein Verfahren zur Ermittlung eines Bearbeitungsergebnisses bei einer Oberflächenbearbeitung von Bauteilen gemäß der im Oberbegriff des Patentanspruches 1 näher definierten Art.

Um eine Oberfläche bzw. eine Randschicht von Bauteilen hinsichtlich ihrer Eigenschaften zu verändern und beispielsweise Eigenspannungen in das Bauteil einzubringen, sind eine Vielzahl von Verfahren, wie Kugelstrahlen, Walzen, Hämmern, Kavitationsverfestigen, Laserschockverfestigen, Ultraschallkugelstrahlen und dergleichen bekannt. Durch eine derartige Maßnahme kann z. B. die Schwingfestigkeit von Bauteilen erhöht bzw. deren Anfälligkeit für Rissbildungen und Rissfortschritte reduziert werden.

Damit die gewünschten Materialeigenschaften erzielt werden, ist es beispielsweise beim Walzen wichtig, einen Überlappungsgrad von nebeneinander verlaufenden Bahnen von Walzkörpern möglichst genau zu kennen. Beim Kugelstrahlen ist der entsprechende Kennwert der Überdeckungsgrad, welcher aussagt, wie viel Prozent der Oberfläche des Bauteils von Strahlkörpern, insbesondere Kugeln, getroffen wurden.

Zur Erzielung eines gewünschten Überdeckungsgrades bei einem Bauteil wird ein Bereich dieses Bauteils zunächst mit einer kurzen Einwirkzeit und ein anderer ungestrahlter Bereich dieses Bauteil anschließend mit einer längeren Einwirkzeit mit Strahlkörpern gestrahlt. Nach Ermittlung des Überdeckungsgrades des jeweiligen Bauteils kann mit Hilfe einer stochastischen Funktion berechnet werden, welche Einwirkzeit nötig ist, um einen gewünschten Überdeckungsgrad, beispielsweise 100 %, einzustellen. Ob dieser mit den errechneten Parametern erreicht wird, wird erneut ermittelt, wobei die Ermittlung der Parameter bei einer Diskrepanz von den berechneten Ergebnissen mit dem gemessenen Ergebnis von neuem begonnen wird.

Der Überdeckungsgrad wird bei bekannten Verfahren beispielsweise auf visuelle Weise ermittelt. Hierzu wird das gestrahlte Bauteil in Augenschein genommen und beispielsweise mit Hilfe einer Lupe der Überdeckungsgrad bewertet. Dieses Verfahren ist nachteilhafterweise sehr fehleranfällig, da die Einschätzung jeweils subjektiv vorgenommen wird und die Ergebnisse selbst bei großer Erfahrung schwanken und nur sehr grob ermittelt werden können.

Die visuelle Beurteilung des Überdeckungsgrads wird erschwert durch die Tatsache, dass die Einschätzung des Überdeckungsgrades von Prozessparametern wie z. B. einer Werkstückhärte, einer Strahlmittelhärte, einer Strahlmittelgröße, einem Auftreffwinkel des Strahlmittelstrahls auf die Werkstückoberfläche, einem Strahldruck, etc. abhängig ist. Die Oberfläche ist bei kleinerem Strahlgut schwerer einzuschätzen als bei größerem Strahlgut. Eine weitere Erschwerung der Ermittlung des Überdeckungsgrades ist durch nicht einheitliche Bearbeitungszustände des betrachteten Bauteils, welches beispielsweise gedreht, gefräst, geschliffen oder geätzt sein kann, bedingt.

Die Überdeckungsbewertung kann über Vergleichsbilder vorgenommen werden. Bei der Bearbeitung von Bauteilen aus verschiedenen Werkstoffen, wie beispielsweise Titan, Werkstoffe auf Nickelbasis und Stahl mit verschiedenen Strahlparametern, wie beispielsweise Strahlmittelgröße, Strahlmittelgeschwindigkeit, Auftreffwinkel, werden unterschiedliche Oberflächen erzeugt, die nicht fehlerfrei mit einer einzigen Vergleichsbilderreihe bewertet werden können. Die Ergebnisse sind zudem schlecht reproduzierbar und schwer dokumentierbar.

Das visuelle Verfahren hat weiter den Nachteil, dass lediglich Überdeckungsgrade bis 100 % ermittelt werden können. Überdeckungsgrade größer 100 % an Stellen des Bauteils, welche mehrmalig von Strahlkörpern getroffen wurden, sind nicht feststellbar. Dies kann dazu führen, dass Bauteile mit einer geringen Duktilität durch zu hohe Bestrahlung verspröden und einem erhöhten Risiko der Rissbildung bzw. der Rissausbreitung ausgesetzt sind.

Das Trefferbild kann gemäß der DE 10 2010 001 286 A1 auch softwareunterstützt oder beispielsweise mittels einer Grauwertanalyse ausgewertet werden. Hierbei wird ein Oberflächenbild der bearbeiteten Oberfläche aufgenommen und entsprechend der jeweiligen Reflexionswerte bestimmt, ob der jeweilige Bereich getroffen oder nicht getroffen wurde. Hierbei müssen zur Aufnahme des Oberflächenbildes verwendete Kamerasysteme für jeden Einzelfall aufwändig kalibriert werden.

Um die Ermittlung des Überdeckungsgrades zu erleichtern, ist z.B. aus US-3950642 das so genannte Peenscan-Verfahren bekannt. Hierbei wird die Oberfläche des zu bestrahlenden Bauteils vor der Bestrahlung mit einem eine dünne Schicht bildenden fluoreszierenden Lack versehen. Durch die Bestrahlung des Bauteils mit dem Strahlgut bricht die Lackschicht bei Überschreiten eines bestimmten Druckes in den getroffenen Bereichen auf und löst sich von dem Bauteil. Zur Ermittlung des Überdeckungsgrades wird eine Einschätzung des noch fluoreszierenden Anteils der Oberfläche des Bauteils zu dem nicht mehr fluoreszierenden Anteil der Oberfläche des Bauteils vorgenommen. Eine Unterscheidung von getroffenen und nicht getroffenen Bereichen kann einfacher und sicherer vorgenommen werden. Zudem ist eine computerunterstützte Ermittlung des Überdeckungsgrades mit digitalisiertem Oberflächenbild und anschließender softwareunterstützter Auswertung gegenüber einem Verfahren ohne eine Beschichtung weniger fehleranfällig.

Nachteilhafterweise ist es gerade bei komplexen Bauteilen schwierig die Lackschicht gleichmäßig aufzutragen, so dass Bereiche vorliegen können, welche bereits vor der Bestrahlung keine Lackschicht aufweisen. Dies ist insbesondere im Bereich von tiefen Rillen möglich, wo sich der Lack nicht so einfach festsetzen kann. Die Ermittlung des Überdeckungsgrades wird hierdurch verfälscht, da die nicht von der Lackschicht bedeckten Bereiche bei der Auswertung wie gestrahlte Bereiche wirken, auch wenn sie nicht getroffen wurden.

Da die Lackschicht mit einem entsprechenden Gerät direkt auf das Bauteil aufgebracht werden muss, kann die Aufbringung bei komplexen Bauteilen mit schwer zugänglichen Bereichen nur schwer oder gar nicht möglich sein.

Die WO 01/92843 A2 offenbart eine Folie eines Reflexionsdehnmessstreifens, die auf ein Bauteil aufklebbar ist. Auf die Folie einfallendes Licht wird von der Folie reflektiert, wobei die Wellenlänge des einfallenden Lichts in Abhängigkeit der Höhe von am Bauteil anliegenden Zug- und Druckbelastungen verändert und reflektiert wird. Mit der Folie sind auf das Bauteil aktuell wirkende Belastungen hinsichtlich deren Existenz, Position und/oder Größe ermittelbar.

Die Druckschrift FR 2 666 895 A1 offenbart eine Folie, die auf einem Bauteil anordenbar ist. Die Folie umfasst eine photoelastische Substanz und gegebenenfalls ein lichtreflektierendes Material. Mittels der Folie sollen beispielsweise Beschädigungen am Bauteil ermittelbar sein, die während der Montage, des Transports, des Betriebs oder während Versuchen aufgetreten sind.

Ein Verfahren und eine Vorrichtung zur fotoelastischen Dehnungsmessung von geometrisch komplex ausgebildeten Bauteilen sind in der Druckschrift DE 22 42 201 A1 beschrieben. Hierbei wird auf einen zu untersuchenden Gegenstand eine Folie aufgebracht. Bei einer Verformung des Gegenstands durch aktuell auf den Gegenstand wirkende Belastungen - wie beispielsweise fluidem Druck oder Einzellasten - werden in der Folie Dehnungen hervorgerufen. Durch eine Auswertung der Dehnungen der Folie werden Rückschlüsse auf einen aktuellen Spannungszustand bzw. eine Dehnungsverformung des Gegenstands ermittelt.

Die US 4,015,465 A offenbart ein Verfahren zur Ermittlung von Alterungserscheinungen in einem Bauteil. Mittels eines auf dem Bauteil angebrachten Sensors, der als Folie ausgebildet sein kann, werden über Farbänderungen des Sensors Rückschlüsse auf den Zustand des Bauteils gezogen. Über den Sensor ist eine quantitative Messung von Alterungserscheinungen des Bauteils möglich. Alterungserscheinungen im Sinne dieser sind Materialschäden, die durch am Bauteil über der Lebensdauer des Bauteils angreifende zyklische Lasten in zunehmendem Umfang verursacht werden.

In der WO 2008/061337 A1 ist ein Verfahren zur Vorhersage einer Standzeit von Bauteilen beschrieben. Hierbei wird ein Dehnmessstreifen auf das Bauteil aufgetragen, mit dem zyklische, auf das Bauteil wirkende Belastungen messbar sind, und der wiederum selbst zyklisch hinsichtlich seiner Zustandsänderungen untersucht wird.

Der vorliegenden Erfindung liegt daher die Aufgabe zugrunde, ein Verfahren zur Ermittlung eines Bearbeitungsergebnisses bei einer Oberflächenbearbeitung von Bauteilen zu schaffen, mittels welchem ein einen Bearbeitungszustand des Bauteils charakterisierender Kennwert genau ermittelt werden kann.

Erfindungsgemäß wird diese Aufgabe mit einem Verfahren mit den Merkmalen des Patentanspruches 1 gelöst.

Es wird somit ein Verfahren zur Ermittlung eines Bearbeitungsergebnisses bei einer Oberflächenbearbeitung von Bauteilen vorgeschlagen, welches die Verfahrensschritte Bereitstellung eines Bauteils, Aufbringung wenigstens einer sich unter Druckeinwirkung verändernden Einrichtung auf das Bauteil, Oberflächenbearbeitung des mit der wenigstens einen Einrichtung versehenen Bauteils, wobei die Oberflächenbearbeitung mittels Einbringen einer Verformungsenergie, insbesondere mittels Kugelstrahlens, Walzens, Kavitationsverfestigens oder Hämmerns, durchgeführt wird und hierbei Eigenspannungen in das Bauteil eingebracht werden, und Auswertung des Bearbeitungsvorgangs anhand der Veränderung der wenigstens einen Einrichtung durch die Oberflächenbearbeitung des Bauteils, aufweist. Erfindungsgemäß wird vorgeschlagen, dass wenigstens eine Einrichtung als eine Folie ausgebildet ist, welche wenigstens eine optische Eigenschaft bei der Oberflächenbearbeitung des Bauteils ändert.

Der den Bearbeitungszustand des Bauteils charakterisierende Kennwert kann mit dem erfindungsgemäßen Verfahren sehr genau ermittelt werden, da die Folie in sämtlichen Bereichen eine konstante Stärke aufweist und auch bei komplexen Bauteilen an schwer zugänglichen Stellen einfach angeordnet werden kann. Ein erfindungsgemäßes Verfahren hat weiter den Vorteil, dass der Bearbeitungsvorgang durch die Änderung der der Folie innewohnenden Eigenschaft einfach ausgewertet werden kann. Die Folie kann hierzu als Ganzes ausgewertet werden, so dass eine detaillierte ortsbezogene Bewertung des Bearbeitungszustands möglich ist.

Die Folie ist auf diversen Werkstoffen mit verschiedenen Bearbeitungszuständen auch in schwer zugänglichen Bereichen anbringbar, wobei die Auswertung der Folie unabhängig von Werkstoffeigenschaften und Bearbeitungszuständen des Bauteils ist. Mit dem erfindungsgemäßen Verfahren sind Bereiche von komplexen Bauteilen analysierbar, welche aufgrund der schweren Zugänglichkeit mit bekannten Verfahren nicht analysiert werden konnten.

Die genauere Ermittlung des Ergebnisses des Bearbeitungsvorgangs spart Zeit und Kosten und vermeidet eine Wiederholung von Versuchen. Auch ist es für sicherheitsrelevante Bauteile, wie beispielsweise Bliskschaufeln von Strahltriebwerken, entscheidend, die Oberfläche im Rahmen enger Toleranzen zu bearbeiten. Durch eine zu lange Bearbeitung kann das Bauteil verspröden, so dass die Oberfläche des Bauteils leichter zur Rissbildung bzw. Rissausbreitung neigt. Eine zu kurze Bearbeitung kann hingegen zu einer nicht ausreichenden Festigkeit führen. Mit dem erfindungsgemäßen Verfahren ist durch die genaue Einstellmöglichkeit der Bearbeitungsparameter eine sehr gleichmäßige Bearbeitung des Bauteils möglich, d. h. es kann vermieden werden, dass manche Bereiche zu lange und andere Bereiche zu kurz bearbeitet werden. Eine Schwingfestigkeit von Bauteilen ist somit optimierbar.

Die zur Durchführung des erfindungsgemäßen Verfahrens benötigte Folie ist in der Art einer Blaupause ausgebildet und vorgefertigt und somit kostengünstig einsetzbar. Mit der Folie ist eine hohe Reproduzierbarkeit geschaffen und eine Dokumentierbarkeit des Ermittlungsergebnisses ist auf einfache Weise möglich.

Die Oberfläche des Bauteils kann mittels vielfältiger Verfahren unter Einbringen einer Verformungsenergie bearbeitet werden. Insbesondere zum Einsatz kommen können das Kugelstrahlen, Ultraschallkugelstrahlen oder das so genannte Flapper Peening. Ein Überdeckungsgrad der Oberfläche des Bauteils kann hierbei sehr genau ermittelt werden, so dass Bereiche mit einer gegenüber einer gewünschten Überdeckung zu hohen Überdeckung weniger gestrahlt werden können. Hierdurch können Zeit und Kosten eingespart werden und eine Versprödung der Oberflächen- bzw. Randschicht des Bauteils vermieden werden, welche durch das Bestrahlen eines Bereichs der Oberfläche mit einer zu hohen Überdeckung hervorgerufen werden kann. Dies wiederum hat einen Vorteil hinsichtlich der Schwingfestigkeit des bearbeiteten Bauteils. Auch Bereiche mit zu niedriger Überdeckung können erkannt werden und der Strahlprozess entsprechend angepasst werden. Des Weiteren wird die Sicherheit für Bauteile aus Materialien die eine spezifische maximale Überdeckung aufweisen, über der hinaus sie verspröden, erhöht.

Die Oberflächenbearbeitung bei einem erfindungsgemäßen Verfahren kann alternativ hierzu beispielsweise auch mittels Walzens, Laserschockverfestigens, Kavitationsverfestigens, Hämmerns, wie z. B. Piezo Peening, oder dergleichen durchgeführt werden. Das erfindungsgemäße Verfahren ist somit für eine Vielzahl von Bearbeitungsprozessen mit unterschiedlichsten Einsatzgebieten verwendbar, um einen vorhergehenden Bearbeitungsvorgang zu bewerten.

Bei einer vorteilhaften Weiterbildung eines erfindungsgemäßen Verfahrens ändert die wenigstens eine Folie bei der Oberflächenbearbeitung des Bauteils unter Einwirkung einer Verformungsenergie, insbesondere unter Druckeinwirkung, ihren optischen Zustand, vorzugsweise ihre Färbung, wobei die optische Änderung der Folie zur Ermittlung des Bearbeitungszustands der Oberfläche des Bauteils verwendet wird. Im Unterschied zu bekannten Verfahren, bei denen die Bauteiloberfläche direkt ausgewertet wird, müssen bei dem erfindungsgemäßen Verfahren keine dreidimensionalen Flächen ausgewertet werden. Die Auswertung ist entsprechend einfach durchführbar. Als optische Zustandsänderung bzw. Farbänderung wird auch verstanden, wenn die Folie beispielsweise von einem milchigen oder durchsichtigen Ausgangszustand unter Druckeinwirkung bei der Oberflächenbearbeitung des Bauteils einen oder mehrere Farbtöne annimmt.

Wenn sich der optische Zustand der wenigstens einen Folie in Abhängigkeit von der eingestrahlten Verformungsenergie bzw. vom eingebrachten Druck unterschiedlich stark ändert, ist eine in dem Bearbeitungsvorgang pro Fläche eingebrachte Verformungsenergie ermittelbar. Die Folie kann z. B. derart drucksensibel ausgebildet sein, dass sie in einem gewünschten Druckbereich ihre Farbe ändert. Die Folie kann ebenfalls derart ausgebildet sein, dass sie in unterschiedlichen Druckbereichen unterschiedliche Farbintensitäten oder unterschiedliche Farben annimmt.

Eine einfache Anbringung der Folie an dem zu bearbeitenden Bauteil ist möglich, wenn die wenigstens eine Folie eine zumindest bereichsweise klebbare Seite aufweist, mittels welcher die Folie auf dem Bauteil angeordnet wird.

Bei einer streifenförmigen Ausbildung der Folie ist eine Anbringung an dem Bauteil besonders einfach möglich. Die Streifen können dabei eine konstante Breite aufweisen, so dass eine Auswertung der Streifen besonders einfach möglich ist.

Um auch mehrmalige Einschläge von Strahlkörpern auf einem Bereich des Bauteils feststellen zu können, können mehrere sich zumindest bereichsweise überlappende Folien auf dem Bauteil angeordnet werden.

Wenn auf dem Bauteil mehrere Folien angeordnet werden, welche ihre Eigenschaften bei gleicher Verformungsenergie unterschiedlich ändern, kann der Bearbeitungszustand des Bauteils besonders genau analysiert werden. Die Folien können insbesondere unterschiedliche Druckempfindlichkeiten aufweisen, wobei eine näher am Bauteil befindliche Folie insbesondere erst bei einer größeren bei der Oberflächenbearbeitung auftretenden Druckeinwirkung ihre Eigenschaft ändert und sich dabei insbesondere einfärbt. Hierdurch sind auch Überdeckungsgrade größer 100 % feststellbar, so dass beispielsweise bei rotationssymmetrischen Bauteilen eine bei einer "falschen" Wahl von Strahlparametern erzeugte Spirale ermittelt und die dabei entstehende mehrmalige Bestrahlung einzelner Bereiche festgestellt werden kann. Es kann auch vorgesehen sein, dass sich verschiedene auf dem zu bearbeitenden Bauteil angeordnete Folien unter Druckeinwirkung in unterschiedlichen Farben färben.

Eine besonders einfache und schnelle Auswertung des Bearbeitungsprozesses des Bauteils ist möglich, wenn die wenigstens eine Folie in ihrer auf dem Bauteil angebrachten Position ausgewertet wird.

Alternativ hierzu kann die wenigstens eine Folie zur Auswertung von dem Bauteil gelöst werden. Dies hat den Vorteil, dass die Folie an einem beliebigen Ort ausgewertet werden kann und hierdurch die Analyse des Bearbeitungsvorgangs an schwer zugänglichen Stellen gegebenenfalls erst ermöglicht wird.

Die wenigstens eine Folie kann auf einfache Weise visuell ausgewertet werden, wobei diese Auswertung gegenüber bekannten Verfahren dadurch erleichtert wird, dass die bearbeiteten Bereiche besonders deutlich sichtbar gemacht werden können.

Alternativ oder zusätzlich zu der visuellen Auswertung kann die wenigstens eine Folie zur Auswertung zunächst digitalisiert und anschließend computerunterstützt beispielsweise mittels einer Grauwertanalyse, ausgewertet werden.

Sowohl die in den Patentansprüchen angegebenen Merkmale als auch die in dem nachfolgenden Ausführungsbeispiel des erfindungsgemäßen Verfahrens angegebenen Merkmale sind jeweils für sich alleine oder in beliebiger Kombination miteinander geeignet, den erfindungsgemäßen Gegenstand weiterzubilden. Die jeweiligen Merkmalskombinationen stellen hinsichtlich der Weiterbildung des Gegenstandes nach der Erfindung keine Einschränkung dar, sondern weisen im Wesentlichen lediglich beispielhaften Charakter auf.

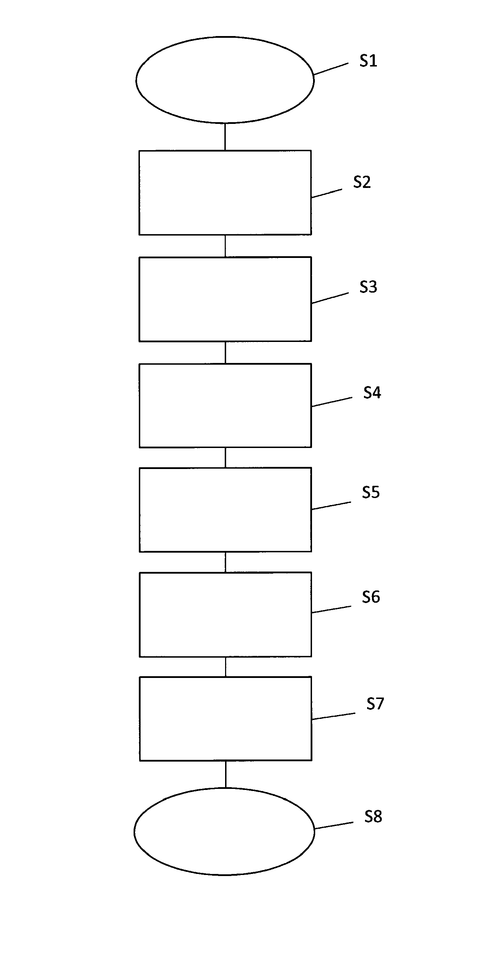

Weitere Vorteile und vorteilhafte Ausführungsformen des erfindungsgemäßen Verfahrens ergeben sich aus den Patentansprüchen und dem nachfolgend unter Bezugnahme auf die Zeichnung prinzipmäßig beschriebenen Ausführungsbeispiel.

Die einzige Figur der Zeichnung zeigt ein Ablaufdiagramm eines vereinfachten erfindungsgemäßen Verfahrens zur Ermittlung eines Bearbeitungsergebnisses bei einer Oberflächenbearbeitung von Bauteilen.

Das erfindungsgemäße Verfahren wird durch den Startblock S1 eingeleitet. Ein zu bearbeitendes Bauteil wird in einem Schritt S2 bereitgestellt, wobei in einem zu bearbeitenden Bereich des Bauteils in einem anschließenden Schritt S3 wenigstens eine druckempfindliche Folie angebracht wird. Die Folie weist in ihrem Grundzustand eine im Wesentlichen durchsichtige Farbe auf, wobei auf einer Seite der Folie ein nicht farblich erscheinendes Farbmedium, beispielsweise in Form von Kügelchen angeordnet ist. Die Folie ist streifenförmig mit einer klebbaren Seite ausgebildet und wird vorliegend in sich nicht überlappenden Bahnen nebeneinander auf dem Bauteil angeordnet, so dass die Folie flächig mit einer konstanten Stärke auf dem Bauteil angeordnet ist.

Zumindest ein Bereich der Oberfläche des Bauteils, auf welchem die Folien angeordnet sind, wird im nächsten Verfahrensschritt S4 mit einem Kugelstrahlverfahren bearbeitet. In von den Strahlkörpern getroffenen Bereichen des Bauteils platzen die Kügelchen der Folie, wobei die in den Kügelchen enthaltene Farbe durch eine Membran eine weitere Schicht der Folie einfärben und so die Bereiche der Folie kennzeichnen, welche von Strahlkörpern getroffen wurden. Die Folie verfärbt sich dabei in den von den Strahlkörpern getroffenen Bereichen je nach einer Höhe des auf den jeweiligen Bereich wirkenden Drucks leicht rot - bei geringen Drücken - oder tiefrot - bei großen Drücken.

Um einen Überdeckungsgrad des in dem Kugelstrahlverfahren bearbeiteten und mit der Folie versehen Bereichs zu ermitteln, werden die Folienstreifen in einem Schritt S5 von dem Bauteil gelöst und in einem Digitalisierungsschritt S6 mit Hilfe einer Kamera aufgenommen. Schließlich wird das Digitalbild in einem Auswertungsschritt S7 mit einer Software analysiert und ausgewertet. Der Verfahrensablauf endet anschließend im Schritt S8.

Es kann auch vorgesehen sein, dass das Bauteil bei einem ersten Verfahrensablauf mit einer kurzen Einwirkzeit gestrahlt wird und ein Überdeckungsgrad ermittelt wird und anschließend ein weiterer Verfahrensablauf mit einem baugleichen Bauteil mit einer längeren Einwirkzeit gestrahlt wird. Durch Verwendung von mathematischen Methoden sind aus den ermittelten Überdeckungsgraden bei kurzen und langen Einwirkzeiten Strahlparameter bestimmbar, welche eingestellt werden müssen, um einen gewünschten Überdeckungsgrad bei der Bestrahlung eines Bauteils zu erzielen.

Mit dem Auswerteverfahren ist durch die Analyse der Farbtönung der einzelnen Bereiche der Folie feststellbar, welche Bereiche des Bauteils mehrmals getroffen wurden und somit einen Überdeckungsgrad größer als 100 % aufweisen. Hierdurch kann auf einfache Weise sichergestellt werden, dass das bearbeitete Bauteil mit einem gewünschten Überdeckungsgrad gefertigt wird.

## Patentansprüche

1. Verfahren zur Ermittlung eines Bearbeitungsergebnisses bei einer Oberflächenbearbeitung von Bauteilen, mit den Verfahrensschritten:
Bereitstellung eines Bauteils (S2),
Aufbringung wenigstens einer sich unter Druckeinwirkung verändernden Einrichtung auf das Bauteil (S3),
Oberflächenbearbeitung des mit der wenigstens einen Einrichtung versehenen Bauteils (S4), wobei die Oberflächenbearbeitung (S4) mittels Einbringen einer Verformungsenergie, insbesondere mittels Kugelstrahlens, Walzens,
Kavitationsverfestigens oder Hämmerns, durchgeführt wird und hierbei Eigenspannungen in das Bauteil eingebracht werden,
Auswertung des Bearbeitungsvorgangs anhand der Veränderung der wenigstens einen Einrichtung durch die Oberflächenbearbeitung des Bauteils (S7),
**dadurch gekennzeichnet,**
**dass** wenigstens eine Einrichtung als eine Folie ausgebildet ist, welche wenigstens eine optische Eigenschaft bei der Oberflächenbearbeitung des Bauteils ändert.

2. Verfahren nach Anspruch 1,
**dadurch gekennzeichnet,**
**dass** die wenigstens eine Folie unter Einwirkung einer Verformungsenergie, insbesondere unter Druckeinwirkung, ihren optischen Zustand, vorzugsweise ihre Färbung, ändert.

3. Verfahren nach Anspruch 2,
**dadurch gekennzeichnet,**
**dass** sich der optische Zustand der wenigstens einen Folie in Abhängigkeit von der eingebrachten Verformungsenergie unterschiedlich stark ändert.

4. Verfahren nach einem der Ansprüche 1 bis 3,
**dadurch gekennzeichnet,**
**dass** die wenigstens eine Folie eine zumindest bereichsweise klebbare Seite aufweist, mittels welcher die Folie auf dem Bauteil angeordnet wird.

5. Verfahren nach einem der Ansprüche 1 bis 4,
**dadurch gekennzeichnet,**
**dass** die wenigstens eine Folie streifenförmig auf dem Bauteil angeordnet wird (S3).

6. Verfahren nach einem der Ansprüche 1 bis 5,
**dadurch gekennzeichnet,**
**dass** auf dem Bauteil mehrere sich zumindest bereichsweise überlappende Folien angeordnet werden (S3).

7. Verfahren nach einem der Ansprüche 1 bis 6,
**dadurch gekennzeichnet,**
**dass** auf dem Bauteil mehrere Folien angeordnet werden (S3), welche ihre Eigenschaften bei gleicher Verformungsenergie unterschiedlich ändern.

8. Verfahren nach einem der Ansprüche 1 bis 7,
**dadurch gekennzeichnet,**
**dass** die wenigstens eine Folie in ihrer auf dem Bauteil angebrachten Position ausgewertet wird (S7).

9. Verfahren nach einem der Ansprüche 1 bis 7,
**dadurch gekennzeichnet,**
**dass** die wenigstens eine Folie zur Auswertung von dem Bauteil gelöst wird (S5).

10. Verfahren nach einem der Ansprüche 1 bis 9,
**dadurch gekennzeichnet,**
**dass** die wenigstens eine Folie visuell ausgewertet wird.

11. Verfahren nach einem der Ansprüche 1 bis 10,
**dadurch gekennzeichnet,**
**dass** die wenigstens eine Folie zur Auswertung digitalisiert (S6) und anschließend computerunterstützt ausgewertet wird (S7).

## Claims

1. Method for determining a machining result of a surface treatment of structural components, comprising the processing steps of:
providing a structural component (S2),
applying onto the structural component (S3) at least one device which changes when pressure is applied to it,
surface treatment of the structural component (S4) which is provided with the at least one device, wherein the surface treatment (S4) is carried out by means of putting in a deformation energy, in particular by means of shot peening, rolling, cavitation peening or hammering, and wherein during this process clamps are inserted into the structural component,
analyzing the machining process based on the change effected in the at least one device through the surface treatment of the structural component (S7),
**characterized in that**
at least one device is formed as a film which changes at least one optical property in the surface treatment of the structural component.

2. Method according to claim 1,
**characterized in that**
the at least one film changes its optical state, preferably its coloring, under the influence of a deformation energy, in particular when pressure is applied.

3. Method according to claim 2,
**characterized in that**
the optical state of the at least one film changes by varying degrees depending on the deformation energy that is put in.

4. Method according to one of the claims 1 to 3,
**characterized in that**
the at least one film at least in certain parts has an adhesive side, by means of which the film is arranged on the structural component.

5. Method according to one of the claims 1 to 4,
**characterized in that**
the at least one film is arranged (S3) on the structural component in a stripe shape.

6. Method according to one of the claims 1 to 5,
**characterized in that**
multiple films that are overlapping at least in certain parts are arranged (S3) on the structural component.

7. Method according to one of the claims 1 to 6,
**characterized in that**
multiple films that change their properties in different degrees as the same deformation energy is being applied are arranged (S3) on the structural component.

8. Method according to one of the claims 1 to 7,
**characterized in that**
the at least one film is analyzed (S7) in its position as it is attached on the structural component.

9. Method according to one of the claims 1 to 7,
**characterized in that**
the at least one film is detached (S5) from the structural component for the purpose of being analyzed.

10. Method according to one of the claims 1 to 9,
**characterized in that**
the at least one film is analyzed visually.

11. Method according to one of the claims 1 to 10,
**characterized in that**
the at least one film is digitized (S6) for the purpose of analysis and is subsequently analyzed in a computer-aided manner (S7).

## Revendications

1. Procédé visant à déterminer un résultat d'usinage lors du traitement de surface de composants, comprenant les étapes suivantes :
préparation d'un composant (S2),
application sur le composant d'au moins un dispositif se modifiant sous l'effet d'une pression (S3), traitement de surface du composant muni du ou des dispositifs (S4), ledit traitement de surface (S4) étant réalisé au moyen de l'application d'une énergie de déformation, notamment par grenaillage, par laminage, consolidation des cavités ou martelage, engendrant ainsi des contraintes internes dans le composant,
évaluation du processus de traitement au vu de la modification du ou des dispositifs par le traitement de surface du composant (S7),
**caractérisé en ce qu'**au moins un dispositif est configuré sous la forme d'un film dont au moins une propriété optique change lors du traitement de surface du composant.

2. Procédé selon la revendication 1,
**caractérisé en ce que**
le ou les films soumis à une énergie de déformation, notamment sous l'effet de la pression, changent d'aspect optique, préférablement de couleur.

3. Procédé selon la revendication 2,
**caractérisé en ce que**
l'intensité du changement optique du ou des films varie en fonction de l'énergie de déformation appliquée.

4. Procédé selon l'une des revendications 1 à 3,
**caractérisé en ce que**
le ou les films présentent au moins par endroits un côté adhésif grâce auquel le film est collé au composant.

5. Procédé selon l'une des revendications 1 à 4,
**caractérisé en ce que**
le ou les films sont disposés sur le composant sous forme de bandes (S3).

6. Procédé selon l'une des revendications 1 à 5,
**caractérisé en ce que**
plusieurs films se superposant au moins partiellement sont disposés sur le composant (S3).

7. Procédé selon l'une des revendications 1 à 6,
**caractérisé en ce que**
plusieurs films, dont les propriétés changent de façons différentes sous l'effet d'une même énergie de déformation, sont disposés sur le composant (S3).

8. Procédé selon l'une des revendications 1 à 7,
**caractérisé en ce que**
le ou les films sont analysés lorsqu'ils sont en position sur le composant (S7).

9. Procédé selon l'une des revendications 1 à 7,
**caractérisé en ce que**
le ou les films sont décollés du composant à des fins d'analyse (S5).

10. Procédé selon l'une des revendications 1 à 9,
**caractérisé en ce que**
le ou les films font l'objet d'une analyse visuelle.

11. Procédé selon l'une des revendications 1 à 10,
**caractérisé en ce que**
le ou les films sont numérisés (S6), puis analysés par ordinateur (S7).
